(19)

**Europäisches Patentamt**
**European Patent Office**
**Office européen des brevets**

(11) **EP 4 497 300 B1**

(12) **EUROPEAN PATENT SPECIFICATION**

(45) Date of publication and mention
of the grant of the patent:
**10.06.2026 Bulletin 2026/24**

(21) Application number: **23774077.4**

(22) Date of filing: **09.01.2023**

(51) International Patent Classification (IPC):
*H04W 84/18* (2009.01)    *H04W 40/00* (2009.01)
*H04W 72/04* (2023.01)    *H04L 5/00* (2006.01)
*H04L 5/16* (2006.01)    *H04W 40/22* (2009.01)
*H04B 7/155* (2006.01)

(52) Cooperative Patent Classification (CPC):
**H04W 84/18; H04L 5/0005; H04L 5/0032;**
**H04W 40/22; H04B 7/15507; H04W 72/04**

(86) International application number:
**PCT/IB2023/050167**

(87) International publication number:
**WO 2023/180815 (28.09.2023 Gazette 2023/39)**

(54) **RESOURCE MANAGEMENT AND ROUTING IN MOBILE AD-HOC NETWORKS THAT EMPLOY MULTI-CHANNEL RECEPTION AND COOPERATIVE RELAYING**

RESSOURCENVERWALTUNG UND ROUTING IN MOBILEN AD-HOC-NETZWERKEN UNTER VERWENDUNG VON MEHRKANALEMPFANG UND KOOPERATIVER WEITERLEITUNG

GESTION DE RESSOURCES ET ROUTAGE DANS DES RÉSEAUX AD-HOC MOBILES EMPLOYANT UNE RÉCEPTION MULTICANAL ET UN RELAIS COOPÉRATIF

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **20.03.2022 IL 29149622**

(43) Date of publication of application:
**29.01.2025 Bulletin 2025/05**

(73) Proprietor: **Rafael Advanced Defense Systems Ltd.**
**3102102 Haifa (IL)**

(72) Inventors:
- FRIDMAN, Yevgeni
2240218 Nahariya (IL)
- GLAM, Aviel
2238138 Nahariya (IL)
- ANAVIM, Yuval
2244841 Nahariya (IL)
- AVADIS, Shimon
2066911 Yoqneam Elit (IL)

(74) Representative: **Kancelaria Eupatent.pl Sp. z o.o.**
**ul. Jana Kilinskiego 193 lok. 2.13**
**93-106 Lodz (PL)**

(56) References cited:
WO-A2-2007/137064    CA-A1- 3 028 814
CN-A- 111 818 652    US-A1- 2011 002 243
US-A1- 2014 247 804

- HSIEN-PO SHIANG ET AL: "Distributed Resource Management in Multihop Cognitive Radio Networks for Delay-Sensitive Transmission", IEEE TRANSACTIONS ON VEHICULAR TECHNOLOGY, IEEE, USA, vol. 58, no. 2, 1 February 2009 (2009-02-01), pages 941 - 953, XP011247205, ISSN: 0018-9545
- DUC NGOC MINH DANG ET AL: "An enhanced multi-channel MAC protocol for wireless ad hoc networks", NETWORK OPERATIONS AND MANAGEMENT SYMPOSIUM (APNOMS), 2012 14TH ASIA-PACIFIC, IEEE, 25 September 2012 (2012-09-25), pages 1 - 4, XP032270824, ISBN: 978-1-4673-4494-4, DOI: 10.1109/APNOMS.2012.6356048

**(Cont. next page)**

- **ALMOTAIRI KHALED H ET AL: "A Distributed Multi-Channel MAC Protocol for Ad Hoc Wireless Networks", IEEE TRANSACTIONS ON MOBILE COMPUTING, IEEE SERVICE CENTER, LOS ALAMITOS, CA, US, vol. 14, no. 1, 1 January 2015 (2015-01-01), pages 1 - 13, XP011566386, ISSN: 1536-1233, [retrieved on 20141202], DOI: 10.1109/ TMC.2014.2316822**
- **KANT KAMAL, AWASTHI LALIT K: "UNICAST AND MULTICAST ROUTING PROTOCOLs FOR MANETs: A COMPARATIVE SURVEY", INTERNATIONAL JOURNAL OF IT & KNOWLEDGE MANAGEMENT (IJITKM), 31 December 2010 (2010-12-31), XP093095334, Retrieved from the Internet <URL:https://www. csjournals.com/IJITKM/Special1/16.% 20UNICAST%20AND%20MULTICAST.pdf> [retrieved on 20231026]**

## Description

TECHNICAL FIELD

The present invention relates to mobile communications, and more particularly, to resource management and routing in mobile ad-hoc networks that employ multi-channel reception and cooperative relaying.

BACKGROUND OF THE INVENTION

Ad-Hoc networks are communications networks that do not rely on any fixed infrastructure to the extent that other communication networks, such as cellular networks and wireless local area networks (WLAN), do. Nodes of an ad-hoc network that are beyond the communication reach of a transmitting network node may be reached through a relay function. A Mobile Ad-Hoc Network (MANET) is an ad-hoc network formed in an arbitrary network topology. The nodes within a MANET are mobile, and thus may move arbitrarily causing the topology of the network to change rapidly.

HSIEN-PO SHIANG ET AL: "Distributed Resource Management in Multihop Cognitive Radio Networks for Delay-Sensitive Transmission", IEEE TRANSACTIONS ON VEHICULAR TECHNOLOGY, IEEE, USA, vol. 58, no. 2, 1 February 2009 discloses the use of a multi-hop multi-frequency resource matrix in a wireless ad-hoc network for determining the relaying.

SUMMARY OF THE INVENTION

The present invention is a MANET and a method according to the appended claims 1 and 10 for providing management of the resources of the MANET and message relaying through the MANET.

According to the teachings of an embodiment of the present invention, there is provided a method for communicating using a mobile ad-hoc network (MANET) having a plurality of nodes in which each node includes a transceiver, operative in a first plurality of frequency channels, having a transmitter and a receiver, the transmitter for selecting at least one frequency channel for transmission and transmitting signals in the at least one selected frequency channel, and the receiver for simultaneously receiving signals from nodes of the MANET in a second plurality of frequency channels that is selected from the first plurality of frequency channels. The method comprises: disseminating to the nodes network information that includes network topology information and network parameters; and based on the disseminated network information: generating a resource allocation table that includes time slots and frequency channels to be allocated amongst the nodes of the MANET, maintaining in the resource allocation table data that is representative of a plurality of session plans, each session plan corresponds to a message to be propagated through the MANET from a source node to a destination node, and each session plan includes a sequence of time slot and frequency channel allocations associated with the source node, and at each time slot, and for each node of one or more nodes of the MANET, deciding which one or more messages to broadcast during the time slot on one or more frequency channels selected from the first plurality of frequency channels, and configuring the node as a relay node for the one or more messages.

Optionally, for each session plan the sequence of time slot and frequency channel allocations corresponds to a number of hops required for the message to reach the destination node.

Optionally, deciding which one or more messages to broadcast includes randomly selecting which one or more messages to broadcast.

Optionally, randomly selecting which one or more messages to broadcast includes selecting the one or more messages according to a uniform probability distribution.

Optionally, randomly selecting which one or more messages to broadcast includes selecting the one or more messages according to a weighted probability distribution.

Optionally, deciding which one or more messages to broadcast is based on a number of potential nodes that can be configured as relay nodes for each message of the one or more messages.

Optionally, the method further comprises: for each node, broadcasting at a next available time slot, the one or more messages to one or more next hope nodes.

Optionally, each node of the one or more nodes decides which one or more messages to broadcast during the time slot in a distributed manner with other nodes of the one or more nodes.

Optionally, the first plurality of frequency channels includes N frequency channels, the transmitter of each node configured to transmit in up to M frequency channels simultaneously where M is less than or equal to N, and the second plurality of frequency channels includes K frequency channels where K is less than or equal to N.

There is also provided according to the teachings of an embodiment of the present invention a mobile ad-hoc network (MANET). The MANET comprises: a plurality of nodes, each of the nodes includes: a transceiver, operative in a first plurality of frequency channels, having a transmitter and a receiver, the transmitter for selecting at least one frequency channel for transmission and transmitting signals in the at least one selected frequency channel, and the receiver for simultaneously receiving signals from nodes of the MANET in a second plurality of frequency channels that is selected from the first plurality of frequency channels, resource management circuitry that, based on network information disseminated to the nodes that includes network topology information and network parameters, is configured for: generating a resource allocation table that includes time slots and frequency channels to be allocated amongst the nodes of the MANET, and maintaining in the resource allocation table data that is representative of a plurality of session plans, each session plan corresponds to a message to be propagated through the MANET from a source node to a destination node, and each session plan includes a sequence of time slot and frequency channel allocations associated with the source node, and routing decision circuitry that, based on the disseminated network information, is configured for: at each time slot deciding which one or more messages to broadcast during the time slot on one or more frequency channels selected from the first plurality of frequency channels, and configuring the node as a relay node for the one or more messages.

Optionally, at each time slot, the routing decision circuitry of each node is configured to decide which one or more messages to broadcast by randomly selecting which one or more messages to broadcast.

Optionally, at each time slot, the routing decision circuitry of each node is configured to randomly selecting which one or more messages to broadcast by selecting the one or more messages according to a uniform probability distribution.

Optionally, at each time slot, the routing decision circuitry of each node is configured to randomly selecting which one or more messages to broadcast by selecting the one or more messages according to a weighted probability distribution.

Optionally, at each time slot, the routing decision circuitry of each node is configured to decide which one or more messages to broadcast based on a number of potential nodes that can be configured as relay nodes for each message of the one or more messages.

Optionally, the routing decision circuitry of each node of the MANET is configured to decide which one or more messages to broadcast during the time slot in a distributed manner with one or more other nodes of the MANET.

Unless otherwise defined herein, all technical and/or scientific terms used herein have the same meaning as commonly understood by one of ordinary skill in the art to which the invention pertains. Although methods and materials similar or equivalent to those described herein may be used in the practice or testing of embodiments of the invention, exemplary methods and/or materials are described below. In case of conflict, the patent specification, including definitions, will control. In addition, the materials, methods, and examples are illustrative only and are not intended to be necessarily limiting.

BRIEF DESCRIPTION OF THE DRAWINGS

Some embodiments of the present invention are herein described, by way of example only, with reference to the accompanying drawings. With specific reference to the drawings in detail, it is stressed that the particulars shown are by way of example and for purposes of illustrative discussion of embodiments of the invention. In this regard, the description taken with the drawings makes apparent to those skilled in the art how embodiments of the invention may be practiced.

Attention is now directed to the drawings, where like reference numerals or characters indicate corresponding or like components. In the drawings:

FIG. 1 is a schematic representation of a mobile ad-hoc network (MANET) according to certain embodiments of the present invention;

FIG. 2 is a schematic block diagram illustrating some of the components of an exemplary node of the MANET of FIG. 1, including a transceiver formed from a combination of a transmitter and a receiver, and a medium access control (MAC) and routing module having resource management circuitry and routing circuitry, according to embodiments of the present invention;

FIG. 3 is a block diagram of an exemplary transmitter that can be employed by the transceiver of FIG. 2;

FIG. 4 is a block diagram of an exemplary multi-channel receiver that can be employed by the transceiver of FIG. 2;

FIGS. 5A - 5C are schematic representations of examples of a flooding scheme, a multi-point relay scheme, and a cooperative relay scheme, respectively, that can be used in networks;

FIG. 6 is a non-limiting example of a resource allocation table that is maintained by each of the nodes of the MANET, and that maintains session plan data for messages to be propagated through the MANET and that represents a sequence of time-slots and frequency channel allocations, according to embodiments of the present invention;

FIG. 7A is a schematic representation of message propagation through a single-channel network that uses a cooperative relay scheme;

FIG. 7B is a schematic representation of message propagation through a multi-channel reception and sub-channel transmission network that uses a cooperative relay scheme, according to an embodiment of the present invention; and

FIG. 8 is a flow diagram illustrating a process for communicating in a MANET by employing resource management and routing, according to embodiments of the present invention.

DESCRIPTION OF THE PREFERRED EMBODIMENTS

The present invention is directed to communications systems in the form of MANETs, and methods for providing resource management and message relaying / routing.

The principles and operation of the methods and communications systems according to present invention may be better understood with reference to the drawings accompanying the description.

Before explaining at least one embodiment of the invention in detail, it is to be understood that the invention is not necessarily limited in its application to the details of construction and the arrangement of the components and/or methods set forth in the following description and/or illustrated in the drawings and/or the examples. The invention is capable of other embodiments or of being practiced or carried out in various ways.

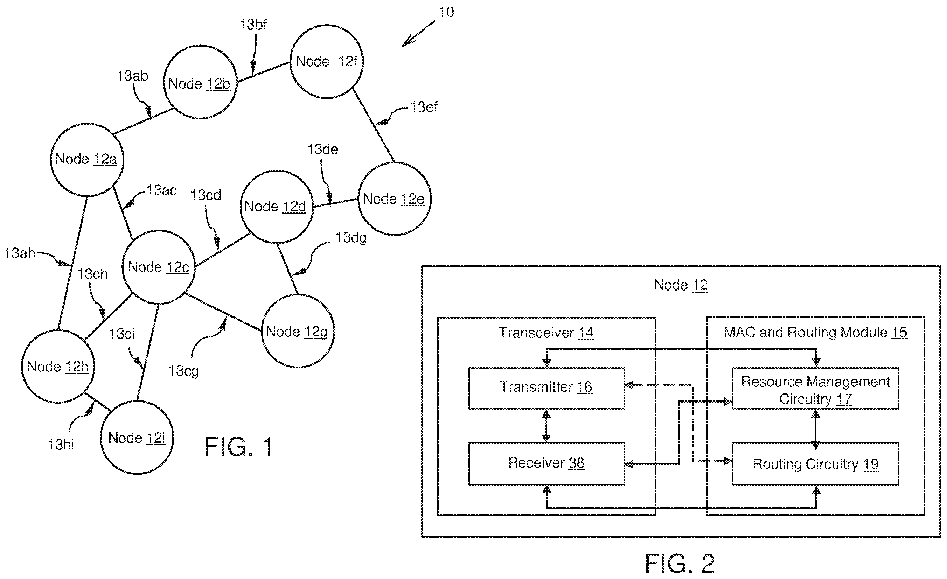

Referring now to the drawings, FIG. 1 illustrates a MANET, generally designated 10, according to certain embodiments of the present disclosure. Generally speaking, the MANET 10 is formed from a plurality of nodes, designated 12a - 12i. Each of the nodes is in direct or indirect signal communication with every other node of the network 10 via one or more communication links, designated 13ab, 13ac, 13ah, 13bf, 13cd, 13cg, 13ch, 13ci, 13de, 13dg. 13ef, and 13hi. Although nine nodes are illustrated in FIG. 1 for simplicity of presentation, embodiments of the present disclosure can be implemented in MANETs having any number of nodes, including several tens of nodes, several hundreds of nodes, or more. In addition, the number of nodes that are part of the MANET 10 may change over time as new nodes join the MANET 10 and/or leave the MANET 10.

Parenthetically, the letters used as part of a communication link identifier are indicative of the two nodes that are in direct signal communication with each other over that communication link, i.e., nodes that can communicate with each other without needing a relay. Thus, for example, communication link 13ab is the communication link through which nodes 12a and 12b are in direct signal communication with each other. Preferably, each of the communication links is a bidirectional link that supports signal transmission from the first node connected to a communication link to the second node connected to the communication link, and vice versa. Thus, for example, communication link 13ab preferably supports direct signal transmission from node 12a to node 12b and direct signal transmission from node 12b to node 12a.

Within the context of the present disclosure, a pair of nodes that are in direct communication with each other (i.e., without an intervening relay node) and are within communication reach of each other are referred to interchangeably as "neighboring nodes" or "neighbor nodes". Thus, for example, the pair of nodes 12a, 12b are neighboring or neighbor nodes, as are, for example, the pair of nodes 12b, 12f. According to this definition of neighboring nodes, the pair of nodes 12a, 12f are not neighboring nodes, since the nodes 12a, 12f are in indirect communication with each other.

Within the context of the present disclosure, a "network hop" refers to the number of communication links (e.g., 13ab, 13bf, etc.), and preferably the smallest number of such links, that are traversed in order for a pair of nodes to communicate with each other. Accordingly, within the context of the present disclosure a pair of neighboring nodes are separated by one network hop, whereas a pair of non- neighboring nodes are necessarily separated by more than one network hop. Thus, for example, the nodes 12a, 12b are separated by one network hop, whereas the nodes 12a, 12f are separated by two network hops. It is noted that although a pair of nodes may be ideally separated by a certain number of network hops along a particular communication route, other routes may be available through the network which may require more network hops, and may become necessary as one or more of nodes moves or one or more nodes leave or join the network, thereby causing the topology of the MANET 10 to change. For example, although initially the node 12a may communicate directly with node 12b (via one network hop), re-deployment or movement of either or both of the nodes 12a, 12b may result in instances or situations in which the nodes 12a, 12b are out of communication reach with each other (i.e., in which the link 13ab is no longer viable or stable), thus resulting in a situation in which the node 12a communicates with the node 12b indirectly, for example via the path of nodes 12a-12c-12d-12b (i.e., three network hops).

The nodes of the MANET 10 employ a combined frequency division multiple access (FDMA) and time division multiple access (TDMA) channel access scheme, referred to herein as frequency-time division multiple access (FTDMA), which allows the nodes to transmit different data streams over different frequency channels at different time-slots. The frequency channels are sub-divisions of an overall operational frequency band that is assigned to the MANET 10, and are referred to herein interchangeably as "logical channels". In other words, the operational band assigned to the MANET 10 is divided into a plurality of logical channels. Each node can transmit at one or more logical channels in one or more time-slots in accordance with resources allocated from a resource allocation table, as will be discussed in subsequent sections of the present disclosure.

With continued reference to FIG. 1, refer also to FIG. 2 which illustrates a schematic block diagram of some of the components of an exemplary node 12 that is part of the MANET 10. Without loss of generality, the node 12 is a representation of each of the nodes 12a - 12i of FIG. 1. In other words, without loss of generality, each of the nodes 12a - 12i can be considered as having components represented in the exemplary block diagram of FIG. 2. The node 12 includes a transceiver 14 that is operative in a plurality of frequency channels that define the operational RF band assigned to the MANET 10, and that is formed from a combination of a transmitter 16 and a receiver 38. The node 12 further includes MAC and routing module 15 that includes logic circuitry (illustrated as resource management circuitry 17 and routing circuitry 19) and handles network resource management (scheduling) and message routing (relaying) through the MANET 10.

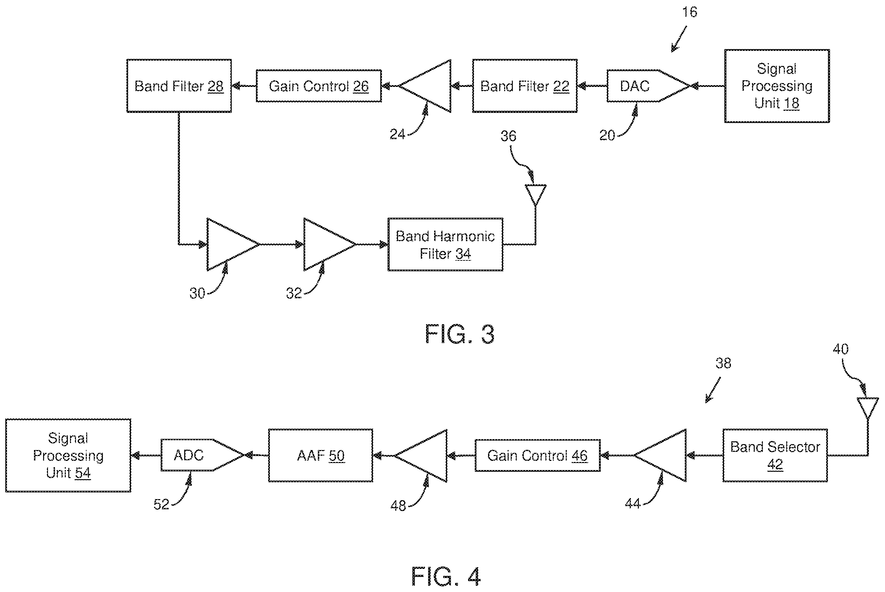

The transmitter 16 is capable of dynamically selecting one or more frequency channels (logical channels), selected from the plurality of frequency channels that define the operational RF band assigned to the MANET **10,** and broadcasting (transmitting) signals in the selected one or more frequency channels to one or more neighbor nodes (next hop nodes). FIG. 3 schematically illustrates an exemplary transmitter **16,** which includes a signal processing unit **18,** a digital to analog converter (DAC) **20,** a pair of band filters **22** and **28,** an RF amplifier **24,** gain control circuitry **26,** RF driver **30,** RF power amplifier **32,** band harmonic filter **34,** and antenna **36.**

The signal processing unit **18** is operative to process (e.g., encode and modulate) and/or generate digital signals. The DAC **20** is in signal communication with the signal processing unit **18,** and is operative to convert digital signals received from the signal processing unit **18** to analog samples. The band filter **22** is in signal communication with the DAC **20** and is operative to filter the analog samples received from the DAC **20** so complete transformation of the analog samples to analog form. The RF amplifier **24** is in signal communication with the filter **22** and is operative to provide pre-amplification of the signals received from the filter **22.** The gain control circuitry **26** is in signal communication with the RF amplifier **24** and is operative to adjust the gain of the pre-amplified signals received from the RF amplifier **24,** for example by adjusting the attenuation level applied to the pre-amplified signal. Although not illustrated, the gain control circuitry **26** may be controlled by a control unit (e.g., a digital control unit or an analog control unit) that is linked to, connected to, or otherwise associated with, the signal processing unit **18.** The second band filter **28** is in signal communication with the gain control circuitry **26** and is operative to further filter the analog signals received from the gain control circuitry **26** in order to clean up any distortion products introduced by the RF amplifier **24.** The RF driver **30** is in signal communication with the band filter **28** and is operative to generate the RF signal to be transmitted, typically by modulating the signal received from the band filter **28** according to the modulation scheme defined by the signal processing unit **18** and amplifying the signal to a level sufficient to drive the RF power amplifier **32.** The RF power amplifier **32** is in signal communication with the RF driver **30** and is operative to amplify the typically lower power waveform signal that is generated by the RF driver **30.** The band harmonic filter **34** is in signal communication with the RF power amplifier **32** and is operative to apply harmonic filtering to the amplified signal received from the RF power amplifier **32** in order to reduce harmonic distortion effects resultant from power amplifier products at multiples of the transmit frequency (frequency channel). The antenna **36** (which may include one or more antenna elements) is in signal communication with the band harmonic filter **34** and is operative to emit waves of electromagnetic radiation in frequency channels (designated by the band filters **22** and **28**) corresponding to the signal received from band harmonic filter **34.**

The receiver **38** is a wideband receiver that is capable of simultaneously receiving and processing signals received from other nodes of the MANET **10** in a plurality of different frequency channels (logical channels) selected from the plurality of frequency channels that define the entire operational RF band assigned to the MANET **10.** In other words, the receiving frequency channels are among the plurality of frequency channels from which the transmitter **16** selects to transmit (i.e., the transmitter **16** and receiver **38** both operate on frequencies that are selected from the same plurality of frequency channels). The receiver **38** is thus referred to as a "multi-channel receiver", thereby characterizing the MANET **10** as having "multi-channel reception" or "MCR" capability. FIG. 4 schematically illustrates an exemplary multi-channel receiver **38,** which includes an antenna **40,** band preselector **42,** low-noise amplifier (LNA) **44,** gain control circuitry **46,** ADC driver **48,** anti-aliasing filter (AAF) **50,** analog to digital converter (ADC) **52,** and signal processing unit **54.**

The antenna **40** is operable to receive a plurality of radio signals across the entire operational band of the MANET **10,** and can include one or more antenna elements. The band preselector **42** is in signal communication with the antenna **38** and is operative to filter the analog signals received from the antenna **40** so as to select a frequency band (preferably a wideband range of frequencies) that includes a plurality of frequency channels. The LNA **44** is in signal communication with the band preselector **42,** and is configured to increase the signal strength of the signals in the selected frequency band and to prevent noise in subsequent stages from contributing materially to signal sensitivity. The gain control circuitry **46** is in signal communication with the LNA **44** and provides gain control functionality, typically in the form of automatic gain control (AGC) functionality, by amplifying and/or attenuating, as necessary, the received signals from the LNA **44.** The ADC driver **48** is in signal communication with the gain control circuitry **46** and is operative to operate on the signals received from the gain control circuitry **46** by performing one or more of amplitude scaling, buffering, offset adjustment, and filtering. The AAF **50** is in signal communication with the ADC driver **48** and is operative to pass frequencies that are below the Nyquist bandwidth associated with the sampling rate of the ADC **52** and reject frequencies above the Nyquist bandwidth. The AAF **50** can be implemented as a low-pass filter having the associated Nyquist frequency as the filter cutoff frequency, or in cases where the ADC **52** may perform undersampling or downsampling the AAF **50** may be implemented as a bandpass filter. The ADC **52** is in signal communication with the AAF **50** and is operative to convert the signals from the AAF **50** to digital signals, i.e., to digitize the signals from the AAF **50.** Preferably, the ADC **52** is a high-speed high-dynamic-range ADC, such as those used in direct RF sampling receivers that can be, for example, implemented as software defined radio receivers. Most direct RF sampling ADCs achieve a high clock rate using interleaving techniques. The signal processing unit **54** is in signal communication with the ADC **52** and is operative to simultaneously process the digital signals from the ADC **52,** i.e., simultaneously process the signals in all of the selected frequency channels. The signal processing unit **54** may include a digital filter bank for dividing the frequency band to the selected frequency channels and a modem for demodulating, decoding and generating digitized baseband signals at each of the selected frequency channels according to the modulation and coding scheme employed by the corresponding transmitter. The signal processing unit **54** may further employ one or more processors, for example in the form of one or more digital signal processors (DSPs), for processing the digitized baseband signals to recover desired signals in each of the selected frequency channels.

Further details of transceivers that provide multi-channel reception (MCR) capability for a MANET is described in commonly owned US Patent No. 9,438,386.

The nodes of the MANET **10** operate in a half-duplex (HDX) regime, meaning that during a given time-slot a node can either transmit or receive, but not both. In other words, a node cannot simultaneously transmit signals and receive signals, i.e., each node cannot receive during transmission and cannot transmit during reception. However, due to the MCR capabilities of the MANET nodes, each node is capable of receiving signals simultaneously at a plurality of frequency channels from one or more other nodes of the MANET.

One of the main challenges in MANETs is maximizing user (node) throughput for a certain allocated bandwidth. In conventional MANETs, the throughput tends to decrease as the number of nodes increases (resulting in an increase in network hops) due to packet (messages) retransmissions via relay nodes that are necessary to accommodate communication between nodes that are out of direct communication reach of each other. Such throughput challenges are typically resolved by employing routing and media access layer (MAC) algorithms, where the routing algorithm aims to select the minimum number of relays that will cover the network, and the MAC algorithm aims to schedule when each node is allowed to transmit while simultaneously avoiding collisions and utilizing allocated bandwidth efficiently by appropriately allocating the resources of the network to the network nodes.

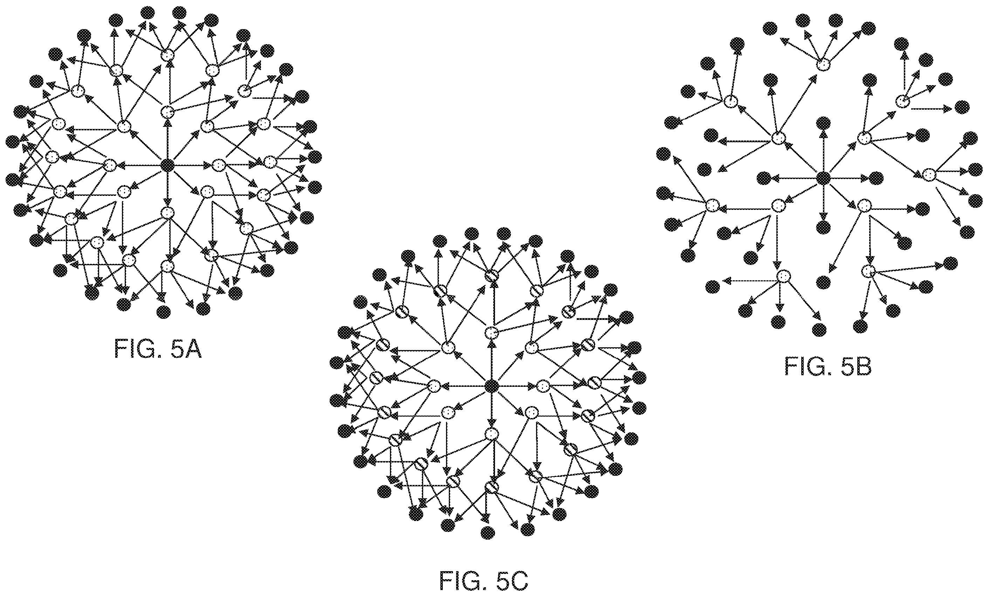

In conventional networks, each node transmits at a different time and therefore broadcasting a packet (message) from a source node to a destination node can result in consumption of a large number of transmissions. In flooding algorithms, for example, the number of transmissions is typically one more than the number of relays required to propagate the packet from the source node to the destination node. FIG. 5A schematically illustrates an example of a flooding scheme, where each relay node (dotted pattern) transmits during its own time slot. Thus, in the illustrated example, 25 time slots are needed to propagate a message from a central source node to one or more destination nodes. FIG. 5B schematically illustrates an improvement of the flooding scheme, referred to as a multi-point relay (MPR) scheme, in which certain relay nodes are selected to propagate source messages, and each selected relay node uses its own resources (i.e., its own time slot). In FIG. 5B, 11 selected relay nodes are depicted (represented by dotted patterns), and therefore 11 time slots are required to propagate a message from the source node to the destination node(s).

In cooperative relays, however, each relay node can transmit the same packet simultaneously, and therefore broadcasting a packet (message) from a source node to a destination node typically results in consumption of a small number of transmissions when compared to flooding and MPR. In fact, the number of transmissions consumed when broadcasting a packet in a cooperative relay is typically one more than the number of network hops, where the number of network hops is at most the radius of a graph from the source node.

Cooperative relay transmission schemes rely on the fact that each relay node can transmit the same packet simultaneously (i.e., during the same time-slot), which is enabled by employing a multiplexing transmission scheme at the node physical layer, for example, orthogonal frequency-division multiplexing (OFDM) in which the total frequency band assigned to the communication system (in this case the MANET 10) is divided into non-overlapping frequency channels (logical channels) that are mutually orthogonal. Accordingly, since all of the nodes are capable of transmitting simultaneously (referred to as sub-channel transmission), the relay nodes can be grouped into groups having different transmission time slots.

FIG. 5C schematically illustrates an example of a cooperative relay scheme. Here, the central node transits at a first time slot, the first set of relay nodes (represented by dotted patterns) transmit at a second time slot, and the second set of relay nodes (represented by diagonal hatch marks) transmit at a third time slot.

The MANET **10** according to embodiments of the present disclosure employs MCR and cooperative relay with particular MAC (resource allocation / scheduling) and routing algorithms, executed by the MAC and routing module **15** (FIG. 2), in order to increase throughput while also avoiding collisions and efficiently utilizing the bandwidth assigned to the MANET **10**. In the non-limiting example illustrated in FIG. 2, the logic circuitry of the MAC and routing module **15** is sub-divided into resource management circuitry **17** which handles the resource allocation (also referred to as resource management) at the MAC layer of the node, and routing circuitry **19** that handles the routing (or relay) function of the node. The sub-division of the routing module **15** into separate circuitry **17** and **19** is shown in FIG. 2 according to a functional subdivision. It should be noted however that these resource management and routing functions may be performed by a processing / control system or other logic circuitry hardware which can be sub-divided in any desired manner, with one or more function being performed by a single element of logic circuitry hardware, or by a single function being performed by separate elements of logic circuitry hardware.

The MAC and routing module **15** may be implemented as suitably configured hardware, including but not limited to, one or more application-specific integrated circuit (ASIC), one or more field-programmable gate array (FPGA), one or more field-programmable logic array (FPLA), or by any suitable combination of hardware/software/firmware. The MAC and routing module **15** may include or may be in data communication with (communicatively coupled to) one or more data storage devices (computerized storage / medium) for storing data and / or information that can be used to execute the resource allocation and routing algorithms disclosed herein.

Bearing the above in mind, the MANET **10** supports up to N distinct and non-overlapping frequency channels (logical channels) that together compose the operational frequency band (RF band) that is assigned to the MANET **10.** By virtue of the MCR functionality of the MANET **10,** each of the nodes can receive in up to $K$ frequency channels simultaneously, where $K \leq N$. In addition, each node can transmit in up to $M$ frequency channels simultaneously, where $M \leq N$, i.e., the nodes are provided with sub-channel transmission functionality. As mentioned, the nodes of the MANET **10** operate in HDX whereby a node that is transmitting cannot receive a transmission at the same time (and vice versa).

For each node, the number of possible frequency channels ($K$) at which the node receives signals is greater than or equal to the number of possible frequency channels ($M$) at which the node can transmit signals in the next available time-slot. In addition, the transmit and receive frequency channels are such that, at each time-slot, the frequency channels at which the transmitter **16** selects to transmit are among the plurality of frequency channels at which the receiver **38** received signals in the previous time-slot. For example, consider a simple case in which the plurality of frequencies defining the operational RF band includes ten frequencies given as $f_1, f_2, f_3, \ldots, f_{10}$. If, for example, during a given time-slot the receiver **38** receives signals at all ten frequencies, the transmitter **16** may select to transmit at one or more of those ten frequencies during the next available transmission time-slot. As another example, if during a given time-slot the receiver **38** receives signals at six of the ten frequencies, for example, frequencies $f_1, f_2, f_3, f_4, f_5, f_6$, the transmitter **16** may select to transmit at one or more of those six frequencies during the next available transmission time-slot.

According to embodiments of the present disclosure, resources are allocated to the nodes of the MANET **10** in a distributed manner and in accordance with various parameters and conditions, including, for example, network topology, node bandwidth requirements, destination node, etc. The nodes of the MANET **10** also apply a distributed decision about relay actions, i.e., whether or not to participate as a relay node for a received transmission. In this sense, the MAC and routing algorithms according to the disclosed embodiments are "topology aware", as the algorithms adapt with the changing topology and conditions of the network.

The operation of the nodes to allocate resources and apply routing decisions in a distributed manner implies that each node effectively makes operating decisions independently from the other nodes, thereby operating for itself without input from other nodes.

The following paragraphs describe how resources are allocated to the nodes of the MANET **10** in a distributed manner, for example by the resource management circuitry **17** of the nodes. In the channel access scheme employed by the MANET **10,** i.e., FTDMA, each resource is an allocation inside an $N \times T$ resource allocation table / matrix, where N is the number of distinct and non-overlapping frequency channels supported by the MANET **10** (i.e., the number of logical channels supported by the FDMA scheme), and T is the number of time-slots in a given TDMA cycle.

Each node generates the resource allocation table, for example based off of an $N \times T$ white permutation matrix that can be generated using a common random seed. The table may be generated and maintained by the resource management circuitry **17.** Each entry in the table corresponds to a particular time-slot and frequency channel that is to be allocated amongst the nodes of the MANET **10.** Each node allocates (takes) the resources from the resource allocation table that are necessary for the node to propagate its message or messages to a corresponding destination node. In particular, the resource allocation table maintains / stores data that represents various session plans, where each session plan corresponds to (i.e., is associated with) a message that is to be propagated through the MANET **10** from a source node to a destination node. Each session plan also includes or represents a sequence of time-slot hops and frequency channel allocations for the source node associated with a given message.

For a given time-slot-frequency-channel entry, each resource, designated $N_S^H$, is an allocation at the time-slot and frequency channel, where $S$ represents the source node associated with the resource and $H$ represents the session hop count (which is the minimum number of hops required for a message to reach its destination node). All of the resources associated with a particular source node $S$ are regarded as being part of the same session. The MAC algorithm employed by the MANET **10** according to embodiments of the present disclosure allocates resources in a distributed manner per source node such that each source node has enough time-slots and frequency channels to propagate its message data to the destination node in accordance with the current network topology (in effect allocating minimal number of hops in the MANET **10** from the source node).

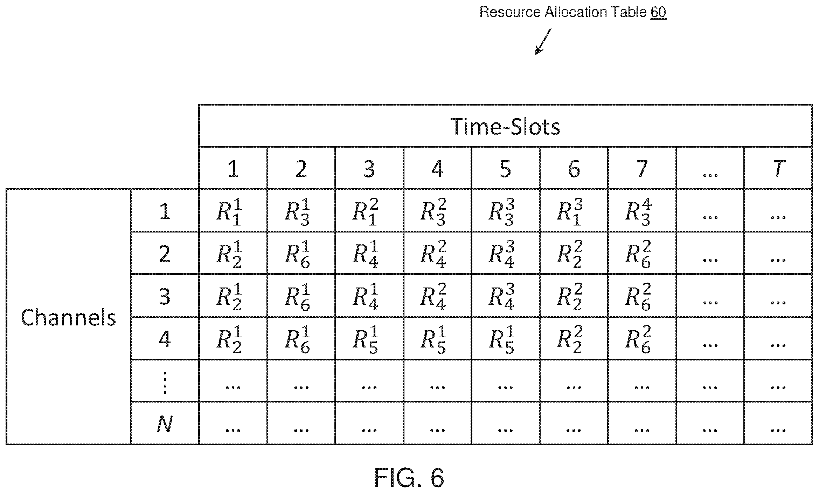

FIG. 6 illustrates a non-limiting example of a partial resource allocation table / matrix **60** according to an embodiment of the present disclosure. The illustrated example is a partial table in that only the entries for the first four frequency channels and the first seven time-slots are shown for conciseness. Also, only six session plans (corresponding to six different nodes) are shown in the illustrated example. In other words, data representing six session plans is represented as being maintained in the table **60** in FIG. 6. However, as should be apparent session plans for any number of nodes can be represented in the resource allocation table.

Looking at table **60**, data for a first session plan (in this case the session plan associated with source node 1) is representative of the set of resources $\{N_1^1, N_1^2, N_1^3\}$. Source node *1* allocates *3* resources on a single frequency channel (channel *1*) and achieves a session of up to 3 hops. Specifically, the first resource, $N_1^1$, is allocated at time-slot 1, the second resource, $N_1^2$, is allocated at time-slot 3, and the third resource, $N_1^3$, is allocated at time-slot 6.

Data for a second session plan (in this case the session plan associated with source node 2) is representative of the set of resources $\{N_2^1, N_2^2\}$. Source node 2 allocates 2 resources on multiple frequency channels (channels 2, 3, and 4) and achieves a higher throughput session (compared to source 1) of up to 2 hops. Specifically, the first resource, $N_2^1$, is allocated at time-slot *1* on each of channels 2, 3, and 4, and the second resource, $N_2^2$, is allocated at time-slot 6 on each of channels *2, 3,* and *4*.

Data for a third session plan (in this case the session plan associated with source node 3) is representative of the set of resources $\{N_3^1, N_3^2, N_3^3, N_3^4\}$. Source node *3* allocates 4 resources on a single frequency channel (channel *1*) and achieves a session of up to 4 hops. Specifically, the first resource, $N_3^1$, is allocated at time-slot 2, the second resource, $N_3^2$, is allocated at time-slot 4, the third resource, $N_3^3$, is allocated at time-slot 5, and the fourth resource, $N_4^3$, is allocated at time-slot 7.

Data for a fourth session plan (in this case the session plan associated with source node 4) is representative of the set of resources $\{N_4^1, N_4^2, N_4^3\}$. Source node *4* allocates 3 resources on multiple frequency channels (channels 2 and 3) and achieves a throughput session of up to *3* hops. Specifically, the first resource, $N_4^1$, is allocated at time-slot *3* on each of channels *2* and *3*, the second resource, $N_4^2$, is allocated at time-slot *4* on each of channels *2* and *3*, and the third resource, $N_4^3$, is allocated at time-slot *5* on each of channels *2* and *3*.

Data for a fifth session plan (in this case the session plan associated with source node 5) is representative of the set of resources $\{N_5^1, N_5^2, N_5^3\}$. Source node *5* allocates *3* resources on a single frequency channel (channel *4*) and achieves a session of up to *3* hops. Specifically, the first resource, $N_5^1$, is allocated at time-slot *3*, the second resource, $N_5^2$, is allocated at time-slot *4*, and the third resource, $N_5^3$, is allocated at time-slot *5*.

Finally, data for a sixth session plan (in this case the session plan associated with source node 6) is representative of the set of resources $\{N_6^1, N_6^2\}$. Source node *6* allocates *2* resources on multiple frequency channels (channels *2, 3,* and *4*) and achieves a throughput session of up to *2* hops. Specifically, the first resource, $N_6^1$, is allocated at time-slot *2* on each of channels *2, 3,* and *4*, and the second resource, $N_6^2$, is allocated at time-slot 7 on each of channels 2, *3,* and *4*.

The nodes of the MANET **10** (for example the resource management circuitry **17** of the nodes) sense / determine, in a distributed manner, whether or not a particular time-slot resource can be allocated in more than one frequency channel to achieve higher throughput. The decision of whether or not to allocate a time-slot resource at more than one frequency channel is made in order to minimize collisions and co-channel interference, thereby accounting for or addressing the hidden terminal / node problem and the exposed terminal / node problem. For example, if node 2 in the example illustrated in FIG. 6 initially considered whether to allocate the first resource, $N_2^1$, at time-slot *1* on channel 1, a decision could be made not to allocate that particular resource since allocation of that particular resource could result in a potential collision or co-channel interference due to the allocation of the first resource, $N_1^1$, for node 1 at time-slot *1* on channel *1*.

According to certain embodiments of the present disclosure, network topology information, for example in the form of link-state information, is disseminated throughout the MANET **10,** enabling each node to determine the number of nodes that are part of the MANET **10.** In addition, the disseminated network topology information enables each node to determine the minimal hop count required for a message transmitted by the node to reach its destination node, as well as the minimal hop count required for messages transmitted by all of the other network nodes to reach their respective destinations. For example, the disseminated topology information can be used by the individual nodes to compute next hop destinations using shortest hop forwarding paths. The network topology information can be disseminated using various routing protocols, such as optimized link state routing protocol (OLSR) which is an internet protocol (IP) that is optimized for MANETs, Ad-hoc on-demand distance vector (AODV) which is a routing protocol optimized for MANETs, Destination-Sequenced Distance-Vector (DSDV), or any other suitable protocol, which can include modifications of suitable routing protocols including the above-mentioned example protocols.

The network topology information is transmitted by the nodes as topology messages in multiple numbers of aggregated logical channels such that each node can allocate the requisite time-slot-frequency-channel resources (from the resource allocation table) according to the minimal hop count associated with the packet / message to be broadcast by the node. Since the nodes employ sub-channel transmission, each node can simultaneously broadcast one or more packet / message at one or more corresponding frequency channel to a next hop node. This also enables each node to divide the maximum transmission power that is allocated to the transmitter **16** between the various sub-channels in an intelligent manner (based on the network topology information).

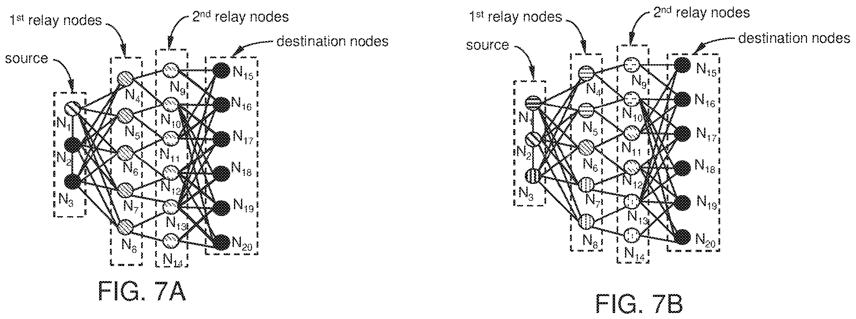

Since the nodes of the MANET **10** are configured as HDX transceivers that have MCR capability, each node can receive more messages than it can transmit / relay. Accordingly, each node should apply a routing decision (i.e., decide whether or not to participate in routing / relaying) on each received message associated with a session plan, and responsively configure itself as a relay node if it decides to participate in routing a session message. In single-channel networks, the routing decision is trivial since each node participates in routing in response to receiving a message from another network node and accordingly configures itself as a relay node to route the received message on to the destination. However, in the MCR configured MANET according to the disclosed embodiments, the routing decision at each node is more complex due to the fact that each node can serve multiple sessions simultaneously (i.e., receive on different frequency channels multiple messages corresponding to one or more session plans). Thus, according to embodiments of the present disclosure, at each time-slot each node, for example the routing circuitry **19** of the node, makes an informed (distributed) routing decision that includes whether or not to participate in routing for a given received message and/or includes selecting which message or messages (from a plurality of received messages) to relay. For example, looking again at the example illustrated in FIG. 6, a node *m* may be a neighboring node to nodes *1* and *2* and may therefore simultaneously receive at time-slot *6* a message transmitted by node *1* on channel *1* (i.e., a message that is part of the session plan associated with node *1*) and a message transmitted by node *2* on channels *2*, *3*, and *4* (i.e., a message that is part of the session plan associated with node *2*). The particular node *m* must decide which if any of the two messages it will relay / route to another node of the MANET in the next hop (i.e., next transmission time-slot). The contrast in the cooperative relay routing decision between single-channel networks and MCR networks will be discussed below with reference to FIGS. 7A and 7B.

Since the nodes of the MANET 10 have sub-channel transmission capability, each node can broadcast, during a single time-slot, multiple messages to one or more next hop nodes. Transmission (broadcasting) of multiple messages during a single time-slot is enabled by the channel access and multiplexing techniques employed by the network, which enables any node to broadcast one or more messages at corresponding one or more frequency channels in the operational frequency band.

Making an informed (distributed) routing decision at each node enables the network to simultaneously provide relay function for messages sent from different source nodes. The routing decision employed by the nodes is made in accordance with a set of routing rules and policies (i.e., a routing protocol) which may take into consideration various network parameters and characteristics, including, but not limited to, the physical layer characteristics of the nodes involved in the message transmission, the current network topology at the time of the routing decision, and any other useful information acquired by the network nodes which may contribute to making a better routing decision. Specific examples of network parameters and characteristics that can be used to form the routing rules and policies include, for examples, the number of stable communication links connected to a sender node (i.e., a node that sent a session message), the number of nodes that can potentially function as a relay node for a given received session message, the number of logical channels on which a message is transmitted by a sender node, the modulation and coding scheme employed by the sender node to transmit a message, potential instability of communication links connecting network nodes, and potential network blocks or jammers that could be encountered by potential relay nodes. These network parameters and characteristics can also be disseminated throughout the network using, for example, the same or similar mechanisms of HELLO messages used in proactive protocols (such as, for example, OLSR, DSDV, etc.) In certain embodiments, the network parameters are transmitted by the nodes together with, or as part of, the topology messages containing the topology information.

In one non-limiting example of routing rules and policies, a node that receives simultaneously messages associated with a plurality of different sessions may randomly select which session message or messages to relay / route / broadcast during the next transmission time. In certain cases, the random selection can be made according to a uniform probability distribution, such that each session message received simultaneously by a node has an equally likely chance of being selected for routing by that note. In other cases, the random selection can be made according to a weighted probability distribution, where weights are assigned to the session messages received simultaneously by a node according to a weight assignment scheme such that the weight that is assigned to each session message is inversely proportional to the number of nodes that can function as a relay node for the session message (i.e., handle relaying / routing the session message). In yet other cases, the decision of whether or not a node routes route a particular session message that is received by the node simultaneously with other session messages can be based on the number of stable communication links from the sender node that are capable of relaying the particular session message. The stability of the communication links and the number of stable communication links may be provided as part of the network topology information disseminated throughout the MANET 10. Typically, a given node has a communication link for each of its neighbor nodes, and if all such communication links are stable enough to handle network traffic there is a stable communication link per neighbor node. If there exists a relatively large number of stable links there also exists an equivalently large number of potential relay nodes for a particular session message (basically a hub in a dense network), and each node that receives the session message can decide using a weighted distribution whether to route the received session message (where the weights can be assigned as discussed above). Conversely, if there exists a relatively small number of stable links there also exists an equivalently small number of potential relay nodes for a particular session message (basically a spoke), and each node that receives the session message can decide to prioritize routing the session message.

In another example of routing rules and policies, a node that receives simultaneously messages associated with a plurality of different sessions may prioritize session messages that are transmitted on multiple frequency channels by a sender node, since a session message transmitted on multiple frequency channels may indicate that the session message is a larger bandwidth signal and therefore may require additional routing assistance. For example, referring again at FIG. 6, an arbitrary node m that simultaneously receives at time-slot 6 a session message transmitted by node 1 on channel 1 and a session message transmitted by node 2 on channels 2, 3, and 4 may select the message sent by node 2 for routing to accommodate the larger bandwidth signal transmitted by node 2, and configure itself as a relay node for node 2 in the next available transmission time-slot.

Along similar lines, the routing rules and policies can be based on modulation and coding scheme such that a node that receives simultaneously messages associated with a plurality of different sessions may prioritize session messages having higher data rate or signal bandwidth based on the modulation and coding scheme used to transmit the session message. For example, if a node receives from a first node a session message that is binary phase shift keying (BPSK) modulated and has a coding rate of ½, and simultaneously (i.e., in the same time-slot) receives from a second node a session message that is 16-quadrature amplitude modulation (QAM) modulated and has a coding rate of ¾, the receiving node may select to route the ¾ code rate 16-QAM message.

In another example of routing rules and policies, a particular node that receives one or more session messages (either a single session message, or a plurality of different session messages simultaneously) may select or choose to refrain from participating in routing any of the one or more session messages, and defer to other potential relay nodes to handle routing of a particular session message. The decision to refrain from (i.e., not participate in) routing may be based on stateful network information such as information indicative of potential communication link instability and / or network blocks or jammers that could be encountered by the particular node. In certain embodiments, if a node decides not to participate in routing a particular session message (as an outcome of the routing decision by routing circuitry **19),** that node may de-allocate some of its already allocated resources (i.e., give back some of its resources to the resource allocation table) so that those de-allocated resources can be allocated to another relay node. Alternatively or in addition, a particular node that receives simultaneously messages associated with multiple sessions may prioritize routing of a particular session message if the particular node is aware of or suspects that there may be potential communication link instability and / or potential blockers or jammers in the routing path of another node that also received the particular session message. For example, looking again at FIG. 1, consider the case in which node **12d** receives simultaneously a first session message from node **12e** and a second session message from node **12g,** and node **12c** also receives the first session message from node **12g.** The first session message from node **12g** is destined for node **12f,** and if routed through node **12d** would reach node **12e** (via link **13de**) and then reach destination node **12f** (via link **13ef),** and if routed through node **12c** would reach node **12a** (via link **13ac)** and then reach node **12b** (via link **13ab)** and then reach destination node **12f** (via link **13bf).** If one or both of links **13de** or **13ef** become unstable and / or a blocker or jammer is anticipated on one or both of links **13de** or **13ef,** such link instability and /or blocker or jammer could prevent the session message from reaching destination node **12f** via node **12d,** and therefore node **12d** can select not to participate in the routing of the first session message from node **12g** and defer the routing to node **12c.** Alternatively or in addition, node **12c** can prioritize routing the first session message from node **12g** over any other messages received from neighbor nodes (for example from nodes **12h** or **12i),** since those other neighbor nodes have other routes to all of the remaining network nodes.

It is noted that the various routing rules and policies discussed above can be used in various combinations and sub-combinations in order to provide a more robust routing decision. For example, a routing decision may be made based in part on link stability and modulation and coding scheme. It is further noted that any session message that is not selected by a node for immediate routing (i.e., transmission on the next available time-slot) may be temporarily stored in a memory of that node and then forwarded / routed at a later time (i.e., in a later time-slot).

In order to illustrate the operation and highlight the advantages of the resource management and routing methods according to the embodiments of the present disclosure, two examples of message propagation in an example network are provided. FIG. 7A shows a first example, in which message propagation through a network that uses a cooperative relay scheme in the context of single-channel communication (in other words, sub-channel transmission functionality is not provided) is illustrated. FIG. 7B shows a second example, in which message propagation through the same network as in FIG. 7B is illustrated, but in which sub-channel transmission and multi-channel reception functionality are provided.

Looking first at FIG. 7A, a source node $N_1$ broadcasts a session message (represented by thick diagonal line marks) to a first set of potential relay nodes (next hop nodes) $N_4$, $N_5$, $N_6$, $N_7$, $N_8$ at a first time slot on a selected frequency channel. Each of the nodes $N_4$, $N_5$, $N_6$, $N_7$, $N_8$ receives the broadcasted session message, and configures itself as a relay node for the session message and broadcasts the session message (represented by thin diagonal line marks) to one or more nodes of a second set of potential relay nodes $N_9$, $N_{10}$, $N_{11}$, $N_{12}$, $N_{13}$, $N_{14}$ at a second time slot on respective frequency channels (for example node $N_4$ broadcasts the session message to nodes $N_9$, $N_{10}$, node $N_5$ broadcasts the session message to nodes $N_{10}$, $N_{11}$, etc.). Each of the nodes $N_9$, $N_{10}$, $N_{11}$, $N_{12}$, $N_{13}$, $N_{14}$ receives the broadcasted session message, and configures itself as a relay node for the session message and broadcasts the session message (represented by thin broken diagonal line marks) to one or more destination nodes $N_{15}$, $N_{16}$, $N_{17}$, $N_{18}$, $N_{19}$, $N_{20}$ at a third time slot (for example node $N_9$ broadcasts the session message to nodes $N_{15}$, $N_{16}$, node $N_{10}$ broadcasts the session message to nodes $N_{16}$, $N_{17}$, etc.).

In the example illustrated in FIG. 7A, since the network is a single-channel network (i.e., the network nodes are not provided with sub-channel transmission functionality), only a single message session can be propagated in the three network hops (i.e., time slots).

The advantages of the of the resource management and routing methods according to the embodiments of the present disclosure are demonstrated in FIG. 7B. Here, by using sub-channel transmission, together with multi-channel reception and cooperative relay functionality, the network is able to propagate three different session messages simultaneously using three network hops (time slots). In FIG. 7B, the source nodes $N_1$, $N_2$, $N_3$ broadcast three different respective session messages, represented by thick horizontal line marks, thick diagonal line marks, and thick vertical line marks, respectively. The source nodes $N_1$, $N_2$, $N_3$ broadcast their respective ses-sion messages simultaneously to a first set of potential relay nodes (next hop nodes) $N_4$, $N_5$, $N_6$, $N_7$, $N_8$, thereby occupying a single time slot. In particular, the node $N_1$ broadcasts a first session message (represented by thick horizontal line marks) to the potential relay nodes $N_4$, $N_5$, $N_6$, $N_7$, $N_8$ during a first time slot on a first selected frequency channel, the node $N_2$ broadcasts a second session message (represented by thick diagonal line marks) to the potential relay nodes $N_4$, $N_5$, $N_6$, $N_7$, $N_8$ during the first time slot on a second selected frequency channel, and the node $N_1$ broadcasts a third session message (represented by thick vertical line marks) to the potential relay nodes $N_4$, $N_5$, $N_6$, $N_7$, $N_8$ during the first time slot on a third selected frequency channel.

Each of the relay nodes $N_4$, $N_5$, $N_6$, $N_7$, $N_8$ receives the three session messages broadcasted by the three source nodes $N_1$, $N_2$, $N_3$ at the three selected frequency channels, and each of the relay nodes $N_4$, $N_5$, $N_6$, $N_7$, $N_8$ decides which session message or messages to relay / route, and configures itself as a relay node according to the routing decision.

In the illustrated example, the routing decision of the relay nodes $N_4$, $N_5$, $N_6$, $N_7$, $N_8$ is as follows:

a) Node $N_4$ decides to route the first session message, and configures itself as a relay node for the first session message and broadcasts the first session message (represented by thin horizontal line marks) to one or more nodes $N_9$, $N_{10}$ in a second set of potential relay nodes $N_9$, $N_{10}$, $N_{11}$, $N_{12}$, $N_{13}$, $N_{14}$ during a second time slot on a first selected fre-quency channel.

b) Node $N_5$ also decides to route the first session message, and configures itself as a relay node for the first session message and broadcasts the first session message (represented by thin horizontal line marks) to one or more nodes $N_{10}$, $N_{11}$ in the second set of potential relay nodes $N_9$, $N_{10}$, $N_{11}$, $N_{12}$, $N_{13}$, $N_{14}$ during the second time slot on a second selected frequency channel.

c) Node $N_6$ decides to route the second session message, and configures itself as a relay node for the second session message and broadcasts the second session message (represented by thin diagonal line marks) to one or more nodes $N_{11}$, $N_{12}$ in the second set of potential relay nodes $N_9$, $N_{10}$, $N_{11}$, $N_{12}$, $N_{13}$, $N_{14}$ during the second time slot on a third selected frequency channel.

d) Node $N_7$ decides to route the third session message, and configures itself as a relay node for the third session message and broadcasts the third session message (represented by thin vertical line marks) to one or more nodes $N_{12}$, $N_{13}$ in the second set of potential relay nodes $N_9$, $N_{10}$, $N_{11}$, $N_{12}$, $N_{13}$, $N_{14}$ during the second time slot on a fourth selected frequency channel.

e) Node $N_8$ also decides to route the third session message, and configures itself as a relay node for the third session message and broadcasts the third session message (represented by thin vertical line marks) to one or more nodes $N_{13}$, $N_{14}$ in the second set of potential relay nodes $N_9$, $N_{10}$, $N_{11}$, $N_{12}$, $N_{13}$, $N_{14}$ during the second time slot on a fifth selected frequency channel.

Each of the relay nodes $N_9$, $N_{10}$, $N_{11}$, $N_{12}$, $N_{13}$, $N_{14}$ receives one or more of the three broadcasted session messages from the one or more nodes of the first set of relay nodes $N_4$, $N_5$, $N_6$, $N_7$, $N_8$, and each of the relay $N_9$, $N_{10}$, $N_{11}$, $N_{12}$, $N_{13}$, $N_{14}$ decides which session message to relay / route, and configures itself as a relay node according to the routing decision.

In the illustrated example, the receiving and routing decision of the relay nodes $N_9$, $N_{10}$, $N_{11}$, $N_{12}$, $N_{13}$, $N_{14}$ is as follows:

a) Node $N_9$ receives the first session message (broadcast by the node $N_4$) and decides to route the first session message, and thus configures itself as a relay node for the first session message and broadcasts the first session message (represented by thin horizontal broken line marks) to one or more nodes $N_{15}$, $N_{16}$ of the destination nodes $N_{15}$, $N_{16}$, $N_{17}$, $N_{18}$, $N_{19}$, $N_{20}$ during a third time slot on a first selected frequency channel.

b) Node $N_{10}$ receives the first session message (broadcast by the nodes $N_4$, $N_5$) and also decides to route the first session message, and thus configures itself as a relay node for the first session message and broadcasts the first session message (represented by thin horizontal broken line marks) to one or more nodes $N_{16}$, $N_{17}$, $N_{18}$, $N_{19}$, $N_{20}$ of the destination nodes $N_{15}$, $N_{16}$, $N_{17}$, $N_{18}$, $N_{19}$, $N_{20}$ during the third time slot on a second selected frequency channel.

c) Node $N_{11}$ receives the first session message (broadcast by the node $N_5$) on one selected frequency channel and simultaneously receives the second session message (broadcast by the node $N_6$) on another selected frequency channel. The node $N_{11}$ decides to route the second session message, and thus configures itself as a relay node for the second session message and broadcasts the second session message (represented by thin diagonal broken line marks) to one or more nodes $N_{15}$,

$N_{16}$, $N_{17}$ of the destination nodes $N_{15}$, $N_{16}$, $N_{17}$, $N_{18}$, $N_{19}$, $N_{20}$ during the third time slot on a third selected frequency channel.

d) Node $N_{12}$ receives the second session message (broadcast by the node $N_6$) on one selected frequency channel and simultaneously receives the third session message (broadcast by the node $N_7$) on another selected frequency channel. The node $N_{12}$ decides to route the second session message, and thus configures itself as a relay node for the second session message and broadcasts the second session message (represented by thin diagonal broken line marks) to one or more nodes $N_{17}$, $N_{18}$, $N_{19}$, $N_{20}$ of the destination nodes $N_{15}$, $N_{16}$, $N_{17}$, $N_{18}$, $N_{19}$, $N_{20}$ during the third time slot on a fourth frequency channel.

e) Node $N_{13}$ receives the second session message (broadcast by the node $N_7$) on one selected frequency channel and simultaneously receives the third session message (broadcast by the node $N_8$) on another selected frequency channel. The node $N_{13}$ decides to route the third session message, and thus configures itself as a relay node for the third session message and broadcasts the third session message (represented by thin vertical broken line marks) to one or more nodes $N_{15}$, $N_{16}$, $N_{17}$, $N_{18}$, $N_{19}$, $N_{20}$ of the destination nodes $N_{15}$, $N_{16}$, $N_{17}$, $N_{18}$, $N_{19}$, $N_{20}$ during the third time slot on a fifth selected frequency channel.

f) Node $N_{14}$ receives the third session message (broadcast by the node $N_8$) on a selected frequency channel and decides to route the third session message, and thus configures itself as a relay node for the third session message and broadcasts the third session message (represented by thin vertical broken line marks) to one or more nodes $N_{19}$, $N_{20}$ of the destination nodes $N_{15}$, $N_{16}$, $N_{17}$, $N_{18}$, $N_{19}$, $N_{20}$ during the third time slot on a sixth selected frequency channel.

As a result, all three session messages successfully simultaneously propagate from source to destination using three hops (time slots). In addition, in the example illustrated in FIG. 7B, each destination node simultaneously receives all three session messages (from various nodes of the second set of relay nodes $N_9$, $N_{19}$, $N_{11}$, $N_{12}$, $N_{13}$, $N_{14}$. **In** particular, during the third time slot the destination nodes receive the session messages as follows:

a) The destination node $N_{15}$ receives the first session message from node $N_9$, receives the second session message from node $N_{11}$, and receives the third session message from node $N_{13}$.

b) The destination node $N_{16}$ receives the first session message from nodes $N_9$, $N_{10}$, receives the second session message from node $N_{11}$, and receives the third session message from node $N_{13}$.

c) The destination node $N_{17}$ receives the first session message from node $N_{10}$, receives the second session message from nodes $N_{11}$, $N_{12}$, and receives the third session message from node $N_{13}$.

d) The destination node $N_{18}$ receives the first session message from node $N_{10}$, receives the second session message from node $N_{12}$, and receives the third session message from node $N_{13}$.

e) The destination node $N_{19}$ receives the first session message from node $N_{10}$, receives the second session message from node $N_{12}$, and receives the third session message from nodes $N_{13}$, $N_{14}$.

f) The destination node $N_{20}$ receives the first session message from node $N_{10}$, receives the second session message from node $N_{12}$, and receives the third session message from nodes $N_{13}$, $N_{14}$.

It is noted that FIG. 7B illustrates an example of a relatively simple routing decision at each relay node, whereby each relay node decides to participate in routing a single session message. However, as discussed above, more complex routing decisions according to embodiments of the present disclosure are possible, and in fact may be common, in which one or more relay nodes simultaneously routes (broadcasts) more than one session message on corresponding frequency channels. As an arbitrary example, the relay node $N_7$ may decide to participate in routing the second session message in addition to routing the third session message such that node $N_7$ broadcasts the second and third session messages simultaneously on two respective frequency channels, such that each of the nodes $N_{12}$, $N_{13}$ receives both second and third session messages during the same time slot. Alternatively, the relay node $N_7$ could decide to participate in the relay for the second session message during a later time slot.

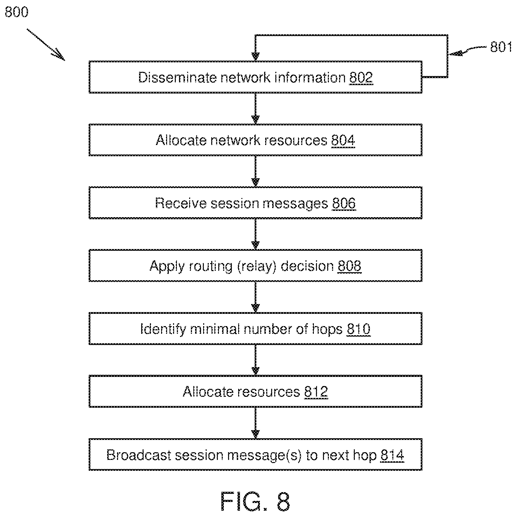

Attention is now directed to FIG. 8, which shows a flow diagram detailing a process **800** in accordance with embodiments of the disclosed subject matter. The process **800** includes resource management and routing algorithms for a mobile ad-hoc network, such as the MANET **10,** in which each of the network nodes is provided with a transceiver architecture that provides both MCR and sub-channel transmission capability/functionality. Reference is also made to the elements of FIGS. 1 - 7B. The process and sub-processes of FIG. 8 include computerized (i.e., computer-implemented) processes performed by the various nodes of the network, including, for each node the transceiver **14** and associated components, including the transmitter **16** and the receiver **38,** and the MAC and routing module **15** and associated components, including the resource management circuitry **17** and the routing circuitry **19**. The aforementioned process and sub-processes are for example, performed automatically, and are performed, for example, in real time.

The process **800** begins at step **802** where network information is disseminated throughout the network. The network information includes network topology information that is disseminated throughout the MANET such that each node of the network determines the minimal hop count required for a message broadcast by the node to reach its destination node, and each node of the network determines the minimal hop count required for messages broadcast by all of the other network nodes to reach their respective destinations. The network information further includes network parameter information and characteristics which can be used to inform the relay decision of each network node. The network information, including the network topology information and the network parameters, can be periodically or intermittently disseminated throughout the network (either randomly or according to some dissemination scheduling algorithm), such that step **802** can be executed repeatedly (as illustrated by feedback arrow **801**). As discussed above, each of the network topology information and network parameters can be disseminated using various routing protocols or algorithms. The network topology information and the network parameters can be disseminated separately, or together.

At step **804,** the network resources (time-slots and frequency channels) are allocated amongst the nodes by the resource management circuitry **17** of the nodes, based on the disseminated network information and in particular the network topology information. As discussed above, each node maintains a resource allocation table having data that represents session plans corresponding to messages to be propagated through the MANET from sources to destinations according to a sequence of time-slot and frequency channel allocations. The resource allocation table can be maintained in the resource management circuitry **17** of the nodes and / or in a data storage device that is part of or is in data communication with the MAC and routing module **15.**

At step **806,** the receiver **38** of the nodes receive, at a time-slot, one or more session messages. At step **808,** the routing circuitry **19** of each node applies a routing decision for each received session message, based on the disseminated network information and in particular the network parameters.

At step **810,** the routing circuitry **19** of each of the nodes participating in the relay (based off the routing decision reached at step **808)** identifies the minimal number of hops required for broadcasting one or more session messages, and at step **812** the resource management circuity **17** of each of those nodes allocates the resources necessary for broadcasting the one or more session messages, which includes allocating a time-slot and one or more frequency channels. At step **814,** the transmitter **16** of each of the nodes participating in a relay (based off the routing decision reached at step **808)** broadcasts one or more of the session messages (received by the node) to a physical area in which the next hop node (or nodes) is (or are) located in the allocated time-slot at the one or more selected frequency channels (allocated at step **812).**

This process typically continues throughout the duration of communication sessions, and for any new communication sessions that are initiated while the MANET is active.

It is noted that in general when relaying transmissions in a cooperative way (i.e., several radio transmitters transmit the same data at the same time and on the same frequency channel), maintaining low frequency diversity between the different transmitters is paramount for successful transmission. When using cooperative relay in the context of the present invention, frequency synchronization to maintain low frequency diversity is critical for enhancing the efficacy and throughput of the network. In simple point-to-point communications, a pair of radio transceivers can typically synchronize their frequencies by employing algorithms at the physical layer (using, for example, phase-locked loops). However, in communication networks having multiple communication nodes, an additional ambiguity pertaining to the target frequency correction for each node may arise which cannot be effectively corrected at the physical layer. In fixed infrastructure communication networks, such as cellular networks and wireless local area networks (WLAN), certain infrastructure components or elements, such as access points and/or base stations, can provide frequency information to the various network nodes in order to overcome such ambiguity so as to enable accurate frequency synchronization across the network. However, frequency synchronization in de-centralized networks, i.e., networks having no fixed infrastructure, such as MANETs, can be particularly challenging. The following paragraphs briefly address techniques for providing frequency synchronization between the nodes of the MANET **10**.

If a source node transmits a session message at carrier frequency $f_0$ in a frequency channel, each neighbor node (first-hop node) that receives the transmitted message and will participate in the relay (based on the routing decision rendered by the node's routing circuitry **19**) applies a frequency correction by first performing a local frequency measurement to determine the frequency difference between the local frequency of the transmitting node and the local frequency of the receiving node. The local frequency difference measured by a node participating in the relay can be expressed as

$$\Delta f_j = f_j^{rcv} - f_0 + \delta_f$$

, where $\delta_f$ is the frequency measurement error, and $f_j^{rcv}$ is the local frequency of the receiving node, and the subscript j is an identifier of the relay node. When each participating relay node transmits (relays) the received session message to the next-hop node, the carrier frequency, $f_j^{trns}$, chosen by the node for transmission is not $f_j^{rcv}$, but is instead a corrected frequency $f_j^{trns} = f_j^{rcv} - \Delta f_j \approx f_0$. In this way, the frequency diversity is reduced and is bounded by the accuracy of the frequency measurement error $\delta_f$ at the receiver nodes, and is not the actual frequency diversities of the radio receivers of the nodes.

The frequency difference (offset) can be measured in various ways and used to apply a frequency correction to a transmitting node. In one technique, the frequency offset is measured based on physical layer data, which can include frequency compensation information in metadata associated with the transmission. This frequency compensation information can be transferred from the physical layer up to the data link layer, and possibly further up to the network layer. In another technique, the frequency offset is measured by counting the number of clock ticks associated with clock and timing circuitry of the receiver node that occur during a calculated measurement time period and comparing the counted ticks to an expected number of clock ticks. In yet another technique, the frequency offset is measured by calculating or tracking the amount of cumulative time corrections applied to the clock or timing circuitry of the receiver node and comparing the accumulated time corrections to a calculated measurement time period. In all of such techniques, the measured frequency offset can be disseminated throughout the network.

The frequency offset measurement and frequency correction techniques mentioned above are described in further detail in commonly owned Israel Patent Application Number 290209, entitled "Frequency Synchronization in Decentralized Communication Networks", and filed on January 31, 2022, which is incorporated by reference in its entirety herein.

In addition to achieving higher throughput, the MANET **10** according to embodiments of the present disclosure provides a diversity scheme (improvement the reliability of message signals) that can achieve a diversity gain. By utilizing cooperative transmission (cooperative relay function), the likelihood of a session message reaching its destination despite potential communication channel issues (for example the issues discussed above, e.g., link instability, jammers, blockers, etc.) is increased. In other words, the likelihood or probability of a session message transmission on at least one relay route successfully reaching the next hop is increased, and therefore the usage of a larger number of relays constitutes a type of diversity gain for the transmitted session message signal. Using an adaptive coding and modulation scheme at the current hop (current time-slot) to ensure efficient modulation and coding, this diversity gain can be translated into an increase in spectral efficiency. For example, as the number of relays used for a session message increases, higher order modulations and code rates become available, whereas as the number of relays used for a session message decreases, lower order modulations and code rates can be used. As a particular example, if a large number of nodes (say four nodes) configure themselves as relay nodes for the same session message at the next hop, a higher order modulation and code rate, for example 16-QAM using ¾ code rate, can be used for the current hop transmission, whereas if a small number of nodes (say one or two nodes) configure themselves as relay nodes for the same session message at the next hop, a lower order modulation and code rate, for example, quadrature phase shift keying (QPSK) using code rate ½ or BPSK using code rate ½, can be used for the current hop transmission. It is noted that the modulation and coding scheme to be used is determined by the source node associated with the session message, and therefore the modulation and coding scheme is characterized by the source node. The routing decision, rendered by the source node's routing circuitry 19, to broadcast a session message to a number of potential relay nodes should influence the modulation and coding scheme used by the source node to transmit the session message. In other words, the number of potential relays should influence the modulation and coding scheme employed by the source node, while at the same time considering the number of hops required to reach the destination node, since the source node may not be aware of the diversity gain for all of the hops.

Implementation of the systems and/or methods of embodiments of the disclosure can involve performing or completing selected tasks implemented by hardware, by software or by firmware or by a combination thereof. For example, hardware for performing selected tasks according to embodiments of the disclosure could be implemented as a chip or a circuit. As software, selected tasks according to embodiments of the disclosure could be implemented as a plurality of software instructions being executed by a computer using any suitable operating system. In certain embodiments of the disclosure, one or more tasks according to exemplary embodiments of systems and/or methods as described herein are performed by a computerized data processor that can execute a plurality of instructions. Optionally, the data processor includes a volatile memory for storing instructions and/or data and/or a non-volatile storage, for example, non-transitory storage media such as a magnetic hard-disk and/or removable media, for storing instructions and/or data.

For example, any combination of one or more non-transitory computer readable (storage) medium(s) may be utilized in accordance with the above-listed embodiments of the present disclosure. The non-transitory computer readable (storage) medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: a portable computer diskette, a hard disk, a random-access memory (RAM), a read-only memory (ROM), an erasable programmable read-only memory (EPROM or Flash memory), a portable compact disc read-only memory (CD- ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

As will be understood with reference to the paragraphs and the referenced drawings, provided above, various embodiments of machine-implemented methods are provided herein, some of which can be performed by various embodiments of systems described herein and some of which can be performed according to instructions stored in non-transitory computer-readable storage media described herein. Still, some embodiments of machine-implemented methods provided herein can be performed by other systems and can be performed according to instructions stored in computer-readable storage media other than that described herein, as will become apparent to those having skill in the art with reference to the embodiments described herein. Any reference to systems and computer-readable storage media with respect to machine-implemented methods is provided for explanatory purposes, and is not intended to limit any of such systems and any of such non-transitory computer-readable storage media with regard to embodiments of computer-implemented methods described above. Likewise, any reference to machine-implemented methods with respect to systems and computer-readable storage media is provided for explanatory purposes, and is not intended to limit any of such computer-implemented methods disclosed herein.

The block diagrams and flowcharts in the drawings illustrate the architecture, functionality, and operation of possible implementations of systems and/or methods according to various embodiments of the present disclosure. In this regard, each block in the block diagrams or flowcharts may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

The descriptions of the various embodiments of the present disclosure have been presented for purposes of illustration, but are not intended to be exhaustive or limited to the embodiments disclosed. Many modifications and variations will be apparent to those of ordinary skill in the art without departing from the scope and spirit of the described embodiments. The terminology used herein was chosen to best explain the principles of the embodiments, the practical application or technical improvement over technologies found in the marketplace, or to enable others of ordinary skill in the art to understand the embodiments disclosed herein.

As used herein, the singular form, "a", "an" and "the" include plural references unless the context clearly dictates otherwise.

The word "exemplary" is used herein to mean "serving as an example, instance or illustration". Any embodiment described as "exemplary" is not necessarily to be construed as preferred or advantageous over other embodiments and/or to exclude the incorporation of features from other embodiments.

It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable subcombination or as suitable in any other described embodiment of the invention. Certain features described in the context of various embodiments are not to be considered essential features of those embodiments, unless the embodiment is inoperative without those elements.

Although the invention has been described in conjunction with specific embodiments thereof, it is evident that many alternatives, modifications and variations will be apparent to those skilled in the art. Accordingly, it is intended to embrace all such alternatives, modifications and variations that fall within the scope of the appended claims.

## Claims

1. A method for communicating using a mobile ad-hoc network, MANET, having a plurality of nodes in which each node includes a transceiver, operative in a first plurality of frequency channels, having a transmitter and a receiver, the transmitter for selecting at least one frequency channel for transmission and transmitting signals in the at least one selected frequency channel, and the receiver for simultaneously receiving signals from nodes of the MANET in a second plurality of frequency channels that is selected from the first plurality of frequency channels, the method comprising:

   disseminating to the nodes network information that includes network topology information and network parameters; and
   based on the disseminated network information:

   generating a resource allocation table that includes time slots and frequency channels to be allocated amongst the nodes of the MANET,
   maintaining in the resource allocation table data that is representative of a plurality of session plans, wherein each session plan corresponds to a message to be propagated through the MANET from a source node to a destination node, and wherein each session plan includes a sequence of time slot and frequency channel allocations associated with the source node, and
   at each time slot, and for each node of one or more nodes of the MANET, deciding which one or more messages to broadcast during the time slot on one or more frequency channels selected from the first plurality of frequency channels, and configuring the node as a relay node for the one or more messages.

2. The method of claim 1, wherein for each session plan the sequence of time slot and frequency channel allocations corresponds to a number of hops required for the message to reach the destination node.

3. The method of claim 1, wherein deciding which one or more messages to broadcast includes randomly selecting which one or more messages to broadcast.

4. The method of claim 3, wherein randomly selecting which one or more messages to broadcast includes selecting the one or more messages according to a uniform probability distribution.

5. The method of claim 3, wherein randomly selecting which one or more messages to broadcast includes selecting the one or more messages according to a weighted probability distribution.

6. The method of claim 1, wherein deciding which one or more messages to broadcast is based on a number of potential nodes that can be configured as relay nodes for each message of the one or more messages.

7. The method of claim 1, further comprising: for each node, broadcasting at a next available time slot, the one or more messages to one or more next hope nodes.

8. The method of claim 1, wherein each node of the one or more nodes decides which one or more messages to broadcast during the time slot in a distributed manner with other nodes of the one or more nodes.

9. The method of claim 1, wherein the first plurality of frequency channels includes N frequency channels, and wherein the transmitter of each node is configured to transmit in up to M frequency channels simultaneously where M is less than or equal to N, and wherein the second plurality of frequency channels includes K frequency channels where K is less than or equal to N.

10. A mobile ad-hoc network, MANET, comprising: a plurality of nodes, wherein each of the nodes includes:

   a transceiver, operative in a first plurality of frequency channels, having a transmitter and a receiver, the transmitter for selecting at least one frequency channel for transmission and transmitting signals in the at least one selected frequency channel, and the receiver for simultaneously receiving signals from nodes of the MANET in a second plurality of frequency channels that is selected from the first plurality of frequency channels,
   resource management circuitry that, based on network information disseminated to the nodes that includes network topology information and network parameters, is configured for:

   generating a resource allocation table that includes time slots and frequency channels to be allocated amongst the nodes of the MANET, and
   maintaining in the resource allocation table data that is representative of a plurality of session plans, wherein each session plan corresponds to a message to be propagated through the MANET from a source node to a destination node, and wherein each session plan includes a sequence of time slot and frequency channel allocations associated with the source node, and

   routing decision circuitry that, based on the disseminated network information, is configured for:
   at each time slot deciding which one or more messages to broadcast during the time slot on one or more frequency channels selected from the first plurality of frequency channels, and configuring the node as a relay node for the one or more messages.

11. The MANET of claim 10, wherein at each time slot, the routing decision circuitry of each node is configured to decide which one or more messages to broadcast by randomly selecting which one or more messages to broadcast.

12. The MANET of claim 11, wherein at each time slot, the routing decision circuitry of each node is configured to randomly select which one or more messages to broadcast by selecting the one or more messages according to a uniform probability distribution.

13. The MANET of claim 11, wherein at each time slot, the routing decision circuitry of each node is configured to randomly select which one or more messages to broadcast by selecting the one or more messages according to a weighted probability distribution.

14. The MANET of claim 10, wherein at each time slot, the routing decision circuitry of each node is configured to decide which one or more messages to broadcast based on a number of potential nodes that can be configured as relay nodes for each message of the one or more messages.

15. The MANET of claim 10, wherein the routing decision circuitry of each node of the MANET is configured to decide which one or more messages to broadcast during the time slot in a distributed manner with one or more other nodes of the MANET.

**Patentansprüche**

1. Verfahren zum Kommunizieren unter Verwendung eines mobilen Ad-hoc-Netzwerks, MANET, das eine Vielzahl von Knoten aufweist, von denen jeder Knoten einen Transceiver, der in einer ersten Vielzahl von Frequenzkanälen betriebsfähig ist, mit einem Sender und einem Empfänger umfasst, wobei der Sender dazu bestimmt ist, mindestens einen Frequenzkanal zum Senden auszuwählen und Signale in dem mindestens einen ausgewählten Frequenzkanal zu senden, und wobei der Empfänger dazu bestimmt ist, gleichzeitig Signale von den Knoten des MANET in einer zweiten Vielzahl von Frequenzkanälen, die aus der ersten Vielzahl von Frequenzkanälen ausgewählt werden, zu empfangen, wobei das Verfahren umfasst:

   Verteilen von Netzwerkinformationen, die Netzwerktopologieinformationen und Netzwerkparameter umfassen; an die Knoten; und basierend auf den verteilten Netzwerkinformationen:

   Generieren einer Ressourcenzuteilungstabelle, die Zeitfenster und Frequenzkanäle umfasst, die zwischen den Knoten des MANET zuzuteilen sind, in der Ressourcenzuteilungstabelle, Pflegen von Daten, die für eine Vielzahl von Sitzungsplänen repräsentativ sind, wobei jeder Sitzungsplan einer Nachricht entspricht, die über das MANET von einem Quellknoten zu einem Zielknoten zu verbreiten ist, und wobei jeder Sitzungsplan eine Sequenz von Zuteilungen von Zeitfenstern und Frequenzkanälen, die dem Quellknoten zugeordnet sind, umfasst, und in jedem Zeitfenster und für jeden Knoten von einem oder den mehreren Knoten des MANET, Entscheiden, welche Nachricht(en) während des Zeitfensters auf einem oder mehreren Frequenzkanälen, die aus der ersten Vielzahl von Frequenzkanälen ausgewählt werden, rundzusenden ist/-sind, und Konfigurieren des Knotens als Relaisknoten für die eine oder die mehreren Nachrichten.

2. Verfahren nach Anspruch 1, wobei für jeden Sitzungsplan die Sequenz von Zuteilungen von Zeitfenstern und Frequenzkanälen einer Anzahl von Sprüngen entspricht, die notwendig sind, damit die Nachricht den Zielknoten erreicht.

3. Verfahren nach Anspruch 1, wobei die Entscheidung, welche Nachricht(en) rundzusenden ist/sind, das zufällige Auswählen, welche Nachricht(en) rundzusenden ist/sind, umfasst.

4. Verfahren nach Anspruch 3, wobei das zufällige Auswählen, welche Nachricht(en) rundzusenden ist/sind, das Auswählen der einen oder der mehreren Nachrichten gemäß einer einheitlichen Wahrscheinlichkeitsverteilung umfasst.

5. Verfahren nach Anspruch 3, wobei das zufällige Auswählen, welche Nachricht(en) rundzusenden ist/sind, das Auswählen der einen oder der mehreren Nachrichten gemäß einer gewichteten Wahrscheinlichkeitsverteilung umfasst.

6. Verfahren nach Anspruch 1, wobei das Entscheiden, welche Nachricht(en) rundzusenden ist/sind, auf einer Anzahl von möglichen Knoten basiert, die für jede Nachricht der einen oder der mehreren Nachrichten als Relaisknoten konfiguriert werden können.

7. Verfahren nach Anspruch 1, ferner umfassend: für jeden Knoten, Rundsenden in einem nächsten verfügbaren Zeitfenster, der einen oder der mehreren Nachrichten an einen oder mehrere nächste Hop-Knoten.

8. Verfahren nach Anspruch 1, wobei jeder Knoten von dem einen oder den mehreren Knoten entscheidet, welche Nachrichten während des Zeitfensters mit anderen Knoten von dem einen oder den mehreren Knoten verteilt rundzusenden sind.

9. Verfahren nach Anspruch 1, wobei die erste Vielzahl von Frequenzkanälen N Frequenzkanäle umfasst, und wobei der Sender jedes Knotens dazu konfiguriert ist, auf bis zu M Frequenzkanäle gleichzeitig zu senden, wobei M kleiner oder gleich N ist, und wobei die zweite Vielzahl von Frequenzkanälen K Frequenzkanäle umfasst, wobei K kleiner oder gleich N ist.

10. Mobiles Ad-hoc-Netzwerk, MANET, umfassend: eine Vielzahl von Knoten, wobei jeder der Knoten umfasst:

einen Transceiver, der in einer ersten Vielzahl von Frequenzkanälen betriebsfähig ist, mit einem Sender und einem Empfänger, wobei der Sender dazu bestimmt ist, mindestens einen Frequenzkanal zum Senden auszuwählen und Signale in dem mindestens einen ausgewählten Frequenzkanal zu senden, und der Empfänger dazu bestimmt ist, gleichzeitig Signal von Knoten des MANET in einer zweiten Vielzahl von Frequenzkanälen, die aus der ersten Vielzahl von Frequenzkanälen ausgewählt werden, zu empfangen, Ressourcenverwaltungsschaltungen, die basierend auf Netzwerkinformationen, die an die Knoten verteilt werden und Netzwerktopologieinformationen und Netzwerkparameter umfassen, konfiguriert sind zum:

Generieren einer Ressourcenzuteilungstabelle, die Zeitfenster und Frequenzkanäle umfasst, die zwischen den Knoten des MANET zuzuteilen sind, und in der Ressourcenzuteilungstabelle, Pflegen von Daten, die für eine Vielzahl von Sitzungsplänen repräsentativ sind, wobei jeder Sitzungsplan einer Nachricht entspricht, die über das MANET von einem Quellknoten zu einem Zielknoten zu verbreiten sind, und wobei jeder Sitzungsplan eine Sequenz von Zuteilungen von Zeitfenstern und Frequenzkanälen, die dem Quellknoten zugeordnet sind, umfasst, und

Routing-Entscheidungsschaltungen, die basierend auf den verteilten Netzwerkinformationen konfiguriert sind zum: in jedem Zeitfenster, Entscheiden, welche Nachricht(en) während des Zeitfensters auf einem oder mehreren Frequenzkanälen, die aus der ersten Vielzahl von Frequenzkanälen ausgewählt werden, rundzusenden ist/sind, und Konfigurieren des Knotens als Relaisknoten für die eine oder die mehreren Nachrichten.

**11.** MANET nach Anspruch 10, wobei in jedem Zeitfenster die Routing-Entscheidungsschaltungen jedes Knotens dazu konfiguriert sind, zu entscheiden, welche Nachricht(en) rundzusenden ist/sind, indem zufällig ausgewählt wird, welche Nachricht(en) rundzusenden ist/sind.

**12.** MANET nach Anspruch 11, wobei in jedem Zeitfenster die Routing-Entscheidungsschaltungen jedes Knotens dazu konfiguriert sind, zufällig auszuwählen, Nachricht(en) rundzusenden ist/sind, indem die eine oder die mehreren Nachrichten gemäß einer einheitlichen Wahrscheinlichkeitsverteilung ausgewählt werden.

**13.** MANET nach Anspruch 11, wobei in jedem Zeitfenster die Routing-Entscheidungsschaltungen jedes Knotens dazu konfiguriert sind, zufällig auszuwählen, welche Nachricht(en) rundzusenden ist/sind, indem die eine oder die mehreren Nachrichten gemäß einer gewichteten Wahrscheinlichkeitsverteilung ausgewählt werden.

**14.** MANET nach Anspruch 10, wobei in jedem Zeitfenster die Routing-Entscheidungsschaltungen jedes Knotens dazu konfiguriert sind, zu entscheiden, welche Nachricht(en) rundzusenden ist/sind, basierend auf einer Anzahl von möglichen Knoten, die für jede Nachricht der einen oder der mehreren Nachrichten als Relaisknoten konfiguriert werden können.

**15.** MANET nach Anspruch 10, wobei die Routing-Entscheidungsschaltungen jedes Knotens des MANET dazu konfiguriert sind, zu entscheiden, welche Nachricht(en) während des Zeitfensters mit einem oder mehreren anderen Knoten des MANET verteilt rundzusenden ist/sind.

**Revendications**

**1.** Procédé permettant de communiquer en utilisant un réseau ad hoc mobile, MANET, présentant une pluralité de nœuds parmi lesquels chaque nœud comprend un émetteur-récepteur, opérationnel dans une première pluralité de canaux de fréquence, présentant un émetteur et un récepteur, l'émetteur étant destiné à sélectionner au moins un canal de fréquence pour l'émission et à émettre des signaux dans ledit au moins un canal de fréquence sélectionné, et le récepteur étant destiné à recevoir simultanément des signaux provenant des nœuds du MANET dans une deuxième pluralité de canaux de fréquence qui est sélectionnée à partir de la première pluralité de canaux de fréquence, le procédé comprenant les étapes consistant à :

disséminer aux nœuds des informations de réseau qui comprennent des informations de topologie de réseau et des paramètres de réseau ; et

sur la base des informations de réseau disséminées :

générer une table d'attribution de ressources qui comprend des créneaux temporels et des canaux de fréquence à attribuer parmi les nœuds du MANET, dans la table d'attribution de ressources, tenir à jour des données qui sont représentatives d'une pluralité de plans de session, dans lequel chaque plan de session correspond à un message à propager à travers le MANET d'un nœud source à un nœud de destination, et dans lequel chaque plan de session comprend une séquence d'attributions de créneaux temporels et de canaux de fréquence associés au nœud source, et à chaque créneau temporel, et pour chaque nœud d'un ou de plusieurs nœuds du MANET, décider quel(s) message(s) est/sont à diffuser pendant le créneau temporel sur un ou plusieurs canaux de fréquence sélectionnés à partir de la première pluralité de canaux de fréquence, et configurer le nœud comme un nœud relais pour ledit un ou les plusieurs messages.

**2.** Procédé selon la revendication 1, dans lequel pour chaque plan de session, la séquence d'attributions de créneaux temporels et de canaux de fréquence correspond à un nombre de sauts nécessaires pour que le message atteigne le nœud de destination.

**3.** Procédé selon la revendication 1, dans lequel la décision quel(s) message(s) est/sont à diffuser comprend la sélection aléatoire du ou des messages à diffuser.

**4.** Procédé selon la revendication 3, dans lequel la sélection aléatoire du ou des messages à diffuser comprend la sélection dudit un ou des plusieurs messages selon une distribution de probabilité uniforme.

**5.** Procédé selon la revendication 3, dans lequel la sélection aléatoire dudit un ou des plusieurs messages à diffuser comprend la sélection dudit un ou des plusieurs messages selon une distribution de probabilité pondérée.

**6.** Procédé selon la revendication 1, dans lequel la décision quel(s) message(s) est/sont à diffuser est basée sur un nombre de nœuds potentiels qui peuvent être configurés en tant que nœuds relais pour chaque message dudit un ou des plusieurs messages.

7. Procédé selon la revendication 1, comprenant en outre : pour chaque nœud, diffuser dans un créneau temporel disponible suivant, ledit un ou les plusieurs messages à un ou plusieurs nœuds de saut suivants.

8. Procédé selon la revendication 1, dans lequel chaque nœud dudit un ou des plusieurs nœuds décide quel(s) message(s) est/sont à diffuser pendant le créneau temporel de manière distribuée avec d'autres nœuds dudit un ou des plusieurs nœuds.

9. Procédé selon la revendication 1, dans lequel la première pluralité de canaux de fréquence comprend N canaux de fréquence, et dans lequel l'émetteur de chaque nœud est configuré pour émettre sur jusqu'à M canaux de fréquence simultanément, où M est inférieur ou égal à N, et dans lequel la deuxième pluralité de canaux de fréquence comprend K canaux de fréquence, où K est inférieur ou égal à N.

10. Réseau ad hoc mobile, MANET, comprenant :
une pluralité de nœuds, chacun des nœuds comprenant :

un émetteur-récepteur, opérationnel dans une première pluralité de canaux de fréquence, présentant un émetteur et un récepteur, l'émetteur étant destiné à sélectionner au moins un canal de fréquence pour l'émission et à émettre des signaux dans ledit au moins un canal de fréquence sélectionné, et le récepteur étant destiné à recevoir simultanément des signaux provenant des nœuds du MANET dans une deuxième pluralité de canaux de fréquence qui est sélectionnée à partir de la première pluralité de canaux de fréquence,
des circuits de gestion de ressources qui, sur la base d'informations de réseau disséminés aux nœuds et qui comprennent des informations de topologie de réseau et des paramètres de réseau, sont configurés pour :

générer une table d'attribution de ressources qui comprend des créneaux temporels et des canaux de fréquence à attribuer parmi les nœuds du MANET, et
dans la table d'attribution de ressources, tenir à jour des données qui sont représentatives d'une pluralité de plans de session, chaque plan de session correspondant à un message à propager à travers le MANET d'un nœud source à un nœud de destination, et dans lequel chaque plan de session comprend une séquence d'attributions de créneaux temporels et de canaux de fréquence associés au nœud source, et

des circuits de décision de routage qui, sur la base des informations de réseau disséminées, sont configurés pour :
à chaque créneau temporel, décider quel(s) message(s) est/sont à diffuser pendant le créneau temporel sur un ou plusieurs canaux de fréquence sélectionnés à partir de la première pluralité de canaux de fréquence, et configurer le nœud en tant que nœud relais pour ledit un ou les plusieurs messages.

11. MANET selon la revendication 10, dans lequel à chaque créneau temporel, les circuits de décision de routage de chaque nœud sont configurés pour décider quel(s) message(s) est/sont à diffuser en sélectionnant de manière aléatoire quel(s) message(s) est/sont à diffuser.

12. MANET selon la revendication 11, dans lequel à chaque créneau temporel, les circuits de décision de routage de chaque nœud sont configurés pour sélectionner de manière aléatoire quel(s) message(s) est/sont à diffuser en sélectionnant ledit un ou les plusieurs messages selon une distribution de probabilité uniforme.

13. MANET selon la revendication 11, dans lequel à chaque créneau temporel, les circuits de décision de routage de chaque nœud sont configurés pour sélectionner de manière aléatoire quel(s) message(s) est/sont à diffuser en sélectionnant ledit un ou les plusieurs messages selon une distribution de probabilité pondérée.

14. MANET selon la revendication 10, dans lequel à chaque créneau temporel, les circuits de décision de routage de chaque nœud sont configurés pour décider quel(s) message(s) est/sont à diffuser sur la base d'un nombre de nœuds potentiels qui peuvent être configurés en tant que nœuds relais pour chaque message dudit un ou des plusieurs messages.

15. MANET selon la revendication 10, dans lequel les circuits de décision de routage de chaque nœud du MANET sont configurés pour décider quel(s) message(s) est/sont à diffuser pendant le créneau temporel de manière distribuée avec un ou plusieurs autres nœuds du MANET.

FIG. 2

FIG. 1

FIG. 3

FIG. 4

FIG. 5B

FIG. 5C

FIG. 5A

EP 4 497 300 B1

Resource Allocation Table 60

| Time-Slots | | | | | | | | |
|---|---|---|---|---|---|---|---|---|
| 1 | 2 | 3 | 4 | 5 | 6 | 7 | ... | T |

| Channels | | 1 | 2 | 3 | 4 | 5 | 6 | 7 | ... | T |
|---|---|---|---|---|---|---|---|---|---|---|
| | 1 | $R_1^1$ | $R_3^1$ | $R_1^2$ | $R_3^2$ | $R_3^3$ | $R_1^3$ | $R_3^4$ | ... | ... |
| | 2 | $R_2^1$ | $R_6^1$ | $R_4^1$ | $R_4^2$ | $R_4^3$ | $R_2^2$ | $R_6^2$ | ... | ... |
| | 3 | $R_2^1$ | $R_6^1$ | $R_4^1$ | $R_4^2$ | $R_4^3$ | $R_2^2$ | $R_6^2$ | ... | ... |
| | 4 | $R_2^1$ | $R_6^1$ | $R_5^1$ | $R_5^1$ | $R_5^1$ | $R_2^2$ | $R_6^2$ | ... | ... |
| | $\vdots$ | ... | ... | ... | ... | ... | ... | ... | ... | ... |
| | $N$ | ... | ... | ... | ... | ... | ... | ... | ... | ... |

FIG. 6

FIG. 7A

FIG. 7B

800

801

Disseminate network information 802

Allocate network resources 804

Receive session messages 806

Apply routing (relay) decision 808

Identify minimal number of hops 810

Allocate resources 812

Broadcast session message(s) to next hop 814

FIG. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9438386 B

- IL 290209

**Non-patent literature cited in the description**

- Distributed Resource Management in Multihop Cognitive Radio Networks for Delay-Sensitive Transmission. **HSIEN-PO SHIANG et al.** IEEE TRANSACTIONS ON VEHICULAR TECHNOLOGY. IEEE, 01 February 2009, vol. 58